## Europäisches Patentamt
## European Patent Office
## Office européen des brevets

(11) Veröffentlichungsnummer: **0 316 600**
**A1**

# EUROPÄISCHE PATENTANMELDUNG

(21) Anmeldenummer: 88117411.4

(51) Int. Cl.4 **E03F 7/10** , //B60P1/64

(22) Anmeldetag: 19.10.88

(30) Priorität: 13.11.87 DE 8715132 U

(43) Veröffentlichungstag der Anmeldung:
**24.05.89 Patentblatt 89/21**

(84) Benannte Vertragsstaaten:
**AT BE CH DE ES FR GB GR IT LI LU NL SE**

(71) Anmelder: **EDELHOFF POLYTECHNIK GMBH & CO.**
**Heckenkamp 31**
**D-5860 Iserlohn 5(DE)**

(72) Erfinder: **Brosch Wilfried**
**Bochumer Str. 149**
**D-4690 Herne 1(DE)**

(74) Vertreter: **Lorenz, Eduard et al**
**Rechtsanwälte Eduard Lorenz - Bernhard**
**Seidler Margrit Seidler - Dipl.-Ing. Hans-K.**
**Gossel Dr. Ina Philipps - Dr. Paul B.**
**Schäuble Dr. Siegfried Jackermeier**
**Dipl.-Ing. Armin Zinnecker**
**Widenmayerstrasse 23 D-8000 München**
**22(DE)**

(54) Transportfahrzeug.

(57) Bei solchen, insbesondere zur Entsorgung von Abfallstoffen eingesetzten Transportfahrzeugen ist die vorgesehene Abroll-Kippvorrichtung ausschließlich zum Manipulieren des Sammelbehälters geeignet. Auf dem Fahrzeugrahmen (2) wäre unmittelbar hinter dem Führerhaus (3) auch eine zusätzliche Last (14) transportierbar, zu deren Manipulation ein bordfremdes Hebezeug gebraucht wird. Aus diesem Grund ist eine solche zusätzliche Last, z.B. in Form eines Pumpaggregats (P), stationär am Fahrzeugrahmen angebracht, was die Nutzlast und den nutzbaren Platz auf dem Fahrzeugrahmen einschränkt. Das neue Transportfahrzeug soll im Hinblick auf eine gesteigerte Transportkapazität mit bordeigenen Mitteln wandelbar sein.

Aus diesem Grund ist am Tragarm (10) ein Greifglied (G, G1) für eine zusätzliche Last (14), die beispielsweise ein Pumpaggregat (P) ist, vorgesehen, und ist das Greifglied in der Transportstellung des Tragarms (10) zwischen der dem Führerhaus zugewandten Vorderseite und der dem Fahrzeugheck (H) zugewandten Rückseite des Tragarms (10) hin- und herbewegbar und anhebbar. Damit kann mit

bordeigenen Mitteln eine zusätzliche Last aufund abgeladen und dadurch die Transportkapazität des Transportfahrzeugs gesteigert werden.

Das Transportfahrzeug eignet sich aufgrund der gesteigerten Transportkapazität insbesondere zur Abfallstoffentsorgung mittels Aufsetztanks oder Tankcontainers und einem diesem zuzuordnenden Pumpaggregat.

FIG.1

# Transportfahrzeug

Die Erfindung betrifft ein Transportfahrzeug der im Oberbegriff des Patentanspruchs 1 angegebenen Art.

Bei solchen Transportfahrzeugen (DE A1 26 17 638), insbesondere für die Abfallstoff-Entsorgung, ist die begrenzte Einsetzbarkeit unter bestimmten Bedingungen ein echter Nachteil. Solche Spezialfahrzeuge böten nämlich die Möglichkeit, unmittelbar hinter dem Führerhaus gegebenenfalls auch eine zusätzliche Last unterzubringen. Zum Auf- oder Abladen dieser zusätzlichen Last sind jedoch die bordeigenen Mittel nicht einsetzbar, so daß für diesen Zweck bordfremdes fallweise aufgesetztes Hebezeug (DE A1 20 44 155) oder eine anderes, entsprechend ausgerüstetes Fahrzeug benötigt werden. Das Greifglied und die Mechanik der Abroll-Kippvorrichtung sind ausschließlich zur Manipulation des Sammelbehälters nutzbar.

Der Erfindung liegt die Aufgabe zugrunde, ein Transportfahrzeug der eingangs genannten Art zu schaffen, das sich durch eine mit geringem baulichem Aufwand und bordeigenen Mitteln erweiterte Transportkapazität auszeichnet.

Die gestellte Aufgabe wird erfindungsgemäß mit den im kennzeichnenden Teil des Patentanspruchs 1 angegebenen Merkmalen gelöst.

Bei dieser Ausbildung besteht die Möglichkeit, bei vorhandenem Platz auf dem Fahrzeugrahmen mit den bordeigenen Mitteln, nämlich dem Greifglied am Tragarm, eine zusätzliche Last auf- und abzuladen und zu transportieren. Mit dem Greifglied läßt sich die zusätzliche Last von der Vorderseite des Tragarms zu dessen Rückseite verlagern, um dann auf dem herkömmlichen Weg mittels der Abrollkippvorrichtung abgeladen zu werden. Umgekehrt läßt sich eine zusätzliche Last mit der Abroll-Kippvorrichtung bis zur Hinterseite des Tragarms bringen und dann mittels des Greifgliedes zur Vorderseite des Tragarms um- und absetzen. Dank dieser zusätzlichen Funktion wird unter Nutzung der Kinematik der Abroll-Kippvorrichtung die Transportkapazität des Transportfahrzeuges in wünschenswerter Weise erweitert, und zwar ohne Zuhilfenahme fremder Mittel. Beispielsweise kann die Nutzlast des Transportfahrzeuges dann erhöht werden, wenn ein nur für bestimmte Zwecke benötigtes bordeigenes Aggregat dann mittels des Greifgliedes und der Abrollkippvorrichtung abgeladen wird, wenn Einsätze gefahren werden, bei denen dieses Aggregat nicht benötigt wird. Die dadurch frei werdende Ladekapazität kann durch erhöhtes Zuladen genutzt werden. Denkbar ist es auch, den dadurch frei werdenden Platz auf dem Fahrzeugrahmen anders zu nutzen. Eine weitere Möglichkeit besteht darin, für unterschiedliche Einsatzzwecke unterschiedliche Hilfsaggregate auf- und abzuladen und so die Transportkapazität zu erweitern. Der bauliche Aufwand bleibt gering, da im überwiegenden Maß ohnedies schon vorhandene Komponenten für die Erweiterung der Transportkapazität genutzt werden, z.B. der Tragarm der Abroll-Kippvorrichtung. Denkbar wäre es auch, einen weiteren, vollen oder leeren Behälter für Werkzeug, Arbeitsmittel, Schutzkleidung, Hilfsmittel, Zusatzstoffe und dgl. an der Vorderseite des Tragarms mitzuführen und die Transportkapazität auf diese Weise bei beispielsweise leerem Sammelbehälter der Abroll-Kippvorrichtung zu nutzen bzw. besser zu nutzen, z.B. bei Unfall- oder Katastropheneinsätzen. Es wird mit anderen Worten durch einen zusätzlichen Freiheitsgrad für das Greifglied am Tragarm die Palette der Einsatzmöglichkeiten für das mit der Abroll-Kippvorrichtung ausgestattete Transportfahrzeug erweitert.

Eine besonders zweckmäßige Ausführungsform geht aus Anspruch 2 hervor. Der bauliche Aufwand für die Erweiterung der Transportkapazität des Transportfahrzeugs bleibt hier wünschenwert gering, da das Greifglied, das für den Sammelbehälter vorgesehen ist, auch zum Manipulieren der zusätzlichen Last eingesetzt wird. Dies bedeutet, daß die zusätzliche Last, sowie auch der Sammelbehälter der Abroll-Kippvorrichtung, vom Anbringungsort auf dem Fahrzeugrahmen bis zum Abstellen auf dem Boden vom selben Greifglied manipuliert wird.

Eine alternative, vorteilhafte Ausführungsform geht aus Anspruch 3 hervor. Der Doppelhaken kann wechselseitig sowohl an der zusätzlichen Last als auch am Sammelbehälter der Abroll-Kippvorrichtung angreifen. Er kann gegebenenfalls so ausgebildet sein, daß die Greifglieder für diese beiden Funktionen den jeweils zu erwartenden Anforderungen angepaßt sind, und zwar hinsichtlich der Belastung als auch der erforderlichen Höhenlage oder dem Angriffsbereich an der Last.

Eine besonders einfache Kinematik für die Bewegungssteuerung des Greifgliedes ergibt sich bei der Ausführungsform gemäß Anspruch 4.

Eine weitere, besonders zweckmäßige Ausführungsform des Erfindungsgegenstandes, bei der der Sammelbehälter ein Aufsetztank oder ein Tankcontainer ist, und bei der zwischen dem Führerhaus und dem Tragarm ein Pumpaggregat vorgesehen ist, geht aus Anspruch 5 hervor. Das Pumpaggregat ist das Zusatzaggregat, das zum Füllen bzw. Entleeren des Sammelbehälters der Abroll-Kippvorrichtung gebraucht wird. Bei stationärer Anbringung auf dem Fahrzeugrahmen reduziert das Pumpaggregat die Nutzlast und den nutzbaren Laderaum auf dem Fahrzeugrahmen. Wenn beispielsweise das Transportfahrzeug mit dem Aufsetztank oder Tankcontainer zum Entsorgen einer größeren Flüssigkeitsmenge benutzt wird, läßt sich das Pumpaggregat bei der ersten Anfahrt mittels des Greifgliedes an seiner Huböse ergreifen, abheben und abladen, um für die aufeinanderfolgenden Füll- oder Entleervorgänge des Sammelbehälters stationär am Arbeitsort eingesetzt zu werden. Erst nach vollständigem Entsorgen der Flüssigkeitsmenge wird das Pumpaggregat vor der letzten Abfahrt wieder aufgeladen und erst dann abtransportiert. Bei den dazwischen erfolgenden Transportfahrten kann das Transportfahrzeug um das Gewicht des Pumpenaggregats schwerer beladen oder der Sammelbehälter näher zum Führerhaus gesetzt werden, was die Kapazität erhöht bzw. ein günstigeres Fahrverhalten des Transportfahrzeuges ergibt. Dabei ist es wichtig, daß weder zum Auf- noch zum Abladen des Pumpaggregates bordfremde Mittel oder fremde Arbeitskräfte nötig sind, denn der Führer des Transportfahrzeuges ist ohne fremde Hilfe in der Lage, das Pumpaggregat von seinem Standort auf dem Fahrzeugrahmen abzuladen und später auch genauso wieder aufzuladen. Es ist ferner denkbar, das Pumpaggregat nach der ersten Anfahrt abzuladen und bei den weiteren An- und Abfahrten zusätzliche Aggregate oder Container mitzunehmen, ohne daß dafür ein Begleitfahrzeug oder zum Abladen ein bordfremdes Hebezeug erforderlich wären.

Zweckmäßig ist dabei die Ausführungsform gemäß Anspruch 6, weil das Greifglied zum Ergreifen der Huböse des Pumpaggregats von Hand oder durch den Drehhilfsantrieb verdreht und dann das Pumpaggregat bzw. die zusätzliche Last mit dem Hubantrieb von seinem Standort abgehoben und zur Hinterseite des Tragarms gedreht werden kann, von wo es mit der Abroll-Kippvorrichtung im vorgegebenen Weg abtransportiert wird. Dabei ist es zweckmäßig, um eine Kollision mit dem Führerhaus oder dem Auflager zu vermeiden, die zusätzliche Last vor dem Drehen zur Hinterseite des Tragarms durch eine Anfangsbewegung des Tragarms, z.B. in Richtung zum Heck, vom Führerhaus und/oder vom Auflager abzurücken.

Eine weitere, zweckmäßige Ausführungsform geht aus Anspruch 7 hervor. Mit dem kombinierten Hub- und Drehantrieb wird die Manipulation der zusätzlichen Last bzw. des Pumpaggregats noch weiter vereinfacht.

Ein weiterer, wichtiger Gesichtspunkt ist in Anspruch 8 enthalten. Die Drehsicherung verhindert, daß sich das Pumpaggregat oder die zusätzliche Last und genauso der Sammelbehälter bei auftretenden seitlichen Kräften während des Ab- oder Aufladens mit dem Greifglied verdrehen könnte. Nur beim Bewegen der zusätzlichen Last zwischen der Vorderseite und der Hinterseite des Tragarms ist die Drehsicherung gelöst.

Wichtig ist ferner die Ausführungsform von Anspruch 9, da die Abstützung trotz des alleinigen Angriffes des Greifgliedes an der Huböse die zusätzliche Last oder das Pumpaggregat in der aufrechten Stellung sichert, bis es von der Hinterseite des Tragarms mittels der AbrollKippvorrichtung weiterbewegt wird.

Eine baulich einfache, funktionssichere und robuste Ausführungsform geht weiterhin aus Anspruch 10 hervor. Der das Greifglied lagernde Hubteil wird sicher an der Führungssäule gehalten. Mit der Kulissendrehführung läßt sich die Dreh- und Hubbewegung des Greifgliedes einwandfrei und feinfühlig steuern. Die Außenabmessungen des Tragarms brauchen nicht verändert zu werden, da die Kulissendrehführung einfach ins Innere des Tragarms einzugliedern ist. Es ist zwar eine Abroll-Kippvorrichtung bekannt, bei der das Greifglied am Tragarm in einem vorbestimmten Höhenbereich auf- und abverfahrbar ist, um die Greifgliedhöhe an die Hubösenhöhe verschieden großer Sammelbehälter anpassen zu können. Jedoch erweitert diese Höhenverstellbarkeit des Greifgliedes die Transportkapazität eines solchen Transportfahrzeuges nicht, weil nach wie vor nur Sammelbehälter auf- und abgeladen werden können. Ist die Höhenverstellbarkeit des Greifgliedes zur Anpassung an unterschiedlich große Sammelbehälter zweckmäßig, so läßt sich diese Höhenbeweglichkeit in einfacher Weise mit der zusätzlichen Beweglichkeit des Greifgliedes zum Auf- und Abladen zusätzlicher Lasten bzw. eines Pumpaggregates kombinieren. Es muß dann nur dafür Sorge getragen sein, daß die Kulissendrehführung bei der Höhenverstellung des Greifgliedes zur Anpassung an unterschiedliche Sammelbehältergrößen noch nicht aktiviert wird.

Zweckmäßig ist ferner die Ausführungsform gemäß Anspruch 11. Der Mittelabschnitt der Führungskulisse bewirkt die 180°-Drehung des Greifgliedes, die zum Bewegen der zusätzlichen Last oder des Pumpaggregates von der Vorderseite zur Hinterseite des Tragarms bzw. umgekehrt eingesetzt wird. Der Mittelabschnitt kann dabei in einer Abwicklung entweder geradlinig oder auch in Form einer Kurvenbahn verlaufen, um von vorherein eine gewünschte Bewegungssteuerung bei der Drehbewegung des Greifgliedes festzulegen.

Eine weitere, vorteilhafte Ausführungsform geht aus Anspruch 12 hervor Die Kulissendrehführung ist hier selbsttätig dafür verantwortlich, daß vor dem Verdrehen des Greifgliedes die Drehsicherung gelöst wird, die in ihrer Eingriffsstellung das ungewollte Verdrehen des Greifgliedes, z.B. unter dem Einfluß seitlicher Drehmomente, verhindert.

Günstig ist ferner die Ausführungsform von Anspruch 13, weil über den Hebeabschnitt die zusätzliche Last bzw. das Pumpaggregat vom Standort auf dem Fahrzeugrahmen angehoben wird und damit soweit freikommt, daß die Drehbewegung zur Hinterseite des Tragarms ungehindert abläuft. Der axiale Verlauf des Hebeabschnittes hat zudem den Vorteil einer Verdrehsicherung für das Greifglied in dieser Arbeitsphase.

Eine kompakte und robuste Ausführungsform geht weiterhin aus Anspruch 14 hervor. Die beweglichen Komponenten sind hier im Inneren des Tragarms untergebracht. Das Axialdrehlager sorgt für eine leichtgängige Beweglichkeit des Greifgliedes auch unter Last.

Günstig ist auch die Ausführungsform von Anspruch 15, weil die Sperrklinke den Hubteil in der ausgefahrenen Stellung arretiert, so daß die beweglichen Komponenten von Lasten freigestellt bleiben.

Eine weitere, alternative Ausführungsform geht aus Anspruch 16 hervor. Unterhalb der Führungssäule ist hier der Platz in der Abroll-Kippvorrichtung zweckmäßig ausgenutzt, um den Hub- und Drehantrieb des Greifgliedes dort unterzubringen. Das Kniehebel-Getriebe spart eine eigenständige Verriegelung ein, da es sich in eine Übertotpunktlage bewegen läßt, in der die Rückbewegung gesperrt bleibt.

Günstig ist ferner die Ausführungsform von Anspruch 17, weil die Bedienungsperson dann gegebenenfalls ferngesteuert das Bewegen der zusätzlichen Last oder des Pumpaggregats überwacht.

Mit den Merkmalen von Anspruch 18 wird sichergestellt, daß bei der Bewegung der Abroll-Kippvorrichtung beim Abladen das Greifglied nicht den zusätzlichen Freiheitsgrad ausnutzt und sich ungewollt bewegen kann, der an sich nur zum Bewegen der zusätzlichen Last bzw. des Pumpaggregats von der Vorderseite des Tragarms zu seiner Hinterseite bzw. umgekehrt gebraucht wird.

Anhand der Zeichnung werden Ausführungsformen des Erfindungsgegenstandes erläutert. Es zeigen:

Fig. 1 ein Transportfahrzeug in schematischer Darstellung, in einer Seitenansicht, mit aufgeladenem Sammelbehälter und aufgeladener, zusätzlicher Last in Form eines Pumpaggregats,

Fig. 2 das Transportfahrzeug von Fig. 1 nach Absetzen des Sammelbehälters,

Fig. 3 das Transportfahrzeug beim Anheben der zusätzlichen Last,

Fig. 4 das Transportfahrzeug beim Abladen der zusätzlichen Last,

Fig. 5 das Transportfahrzeug mit aufgeladenem Sammelbehälter,

Fig. 6 einen Vertikalschnitt durch ein Detail aus Fig. 1,

Fig. 6a ein Detail aus Fig. 6, in einer Abwicklung,

Fig. 7 eine Draufsicht des Details von Fig. 6,

Fig. 8 einen Teil einer Detailvariante, und

Fig. 9 einen Teil einer weiteren Detailvariante.

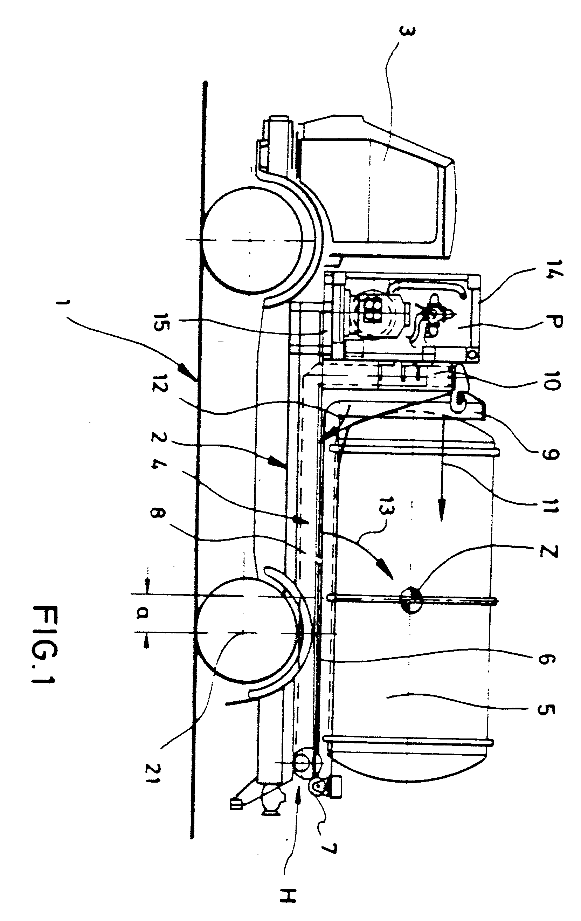

Ein Transportfahrzeug gemäß Fig. 1, nämlich ein Spezialfahrzeug zum Entsorgen flüssiger oder pastöser Abfallstoffe, weist ein Lastkraftwagenfahrgestell mit einem Fahrzeugrahmen 2 und einem Führerhaus 3 auf. Im Fahrzeugrahmen 2 ist in einem nicht-dargestellten Hilfsrahmen eine Abroll-Kippvorrichtung 4 eingebaut, auf der bei dieser Ausführungsform als Sammelbehälter 5 ein Aufsetztank oder Tankcontainer mit einem unteren Laderahmenteil 6 und einem nach oben ragenden Rahmenteil 9 zum Transport lagegesichert ist. Am heckseitigen Ende des Rahmenteils 6 sind Laufrollen 7 angebracht. In der Abroll-Kippvorrichtung 4 ist im Fahrzeugrahmen 2 ein unterer Teil 8 eines Kipp- oder Rollgerüsts mit nicht-dargestellten Bewegungselementen untergebracht, von dem in der Transportstellung ein Tragarm 10 annähernd senkrecht nach oben ragt. Das Gerüst 8 oder der Tragarm 10 ist beispielsweise in Richtung eines Pfeils 11 verfahrbar. Der Tragarm 10 läßt sich zusätzlich in Richtung eines Pfeiles 12 relativ zum Gerüst 8 verschwenken. Das Gerüst 8 ist seinerseits entweder in Richtung eines Pfeiles 13 hochkippbar oder in anderer Weise zum Ab- oder Aufladen des Sammelbehälters 5 bewegbar. Die Kinematik für Abroll-Kippvorrichtungen wird als bekannt vorausgesetzt und nicht im Detail erläutert.

Zwischen dem Tragarm 10 und dem Führerhaus 3 ist auf dem Fahrzeugrahmen 2 eine zusätzliche Last 14, z.B. ein Pumpaggregat P, auf einer Lagerung 15 lösbar angebracht. Das Pumpaggregat P dient beispielsweise zum Befüllen oder Entleeren des Sammelbehälters 5 und wird durch bordeigene Mittel angetrieben. Das Pumpaggregat P kann sowohl auf dem Fahrzeugrahmen 2 als auch davon getrennt eingesetzt werden. Das über die Hinterachse 21 überstehende Heck des Fahrzeugrahmens 2 ist mit H bezeichnet. Im Hilfsrahmen sind weitere, nicht hervorgehobene Rollen oder Gleitmittel untergebracht.

Der Schwerpunkt Z des Sammelbehälters 5 liegt in einem Abstand a vor der Hinterachse 21. Der Tragarm 10 ist so weit in Richtung zum Führerhaus 3 bewegt, daß er an die zusätzliche Last 14 anschließt.

Das Transportfahrzeug 1 gemäß Fig. 1 kann mit der dargestellten Ausrüstung mit vollem oder leerem Sammelbehälter 5 zum oder vom Einsatzort fahren. Der Sammelbehälter 5 kann auf dem Transportfahrzeug befüllt oder entleert werden. Es ist allerdings auch möglich, ihn mittels der Abroll-Kippvorrichtung 4 abzuladen und in vollem oder leerem Zustand wieder aufzuladen. Anstelle eines Tankcontainers oder Aufsetztanks könnte auch ein Sammelcontainer oder eine Sammelmulde geladen und transportiert werden, die mittels des Tragarmes 10 manipuliert wird. Die zusätzliche Last 14 könnte auch ein anderes Aggregat als ein Pumpaggregat sein oder auch ein Container oder ein weiterer Behälter, wobei die Belastungen während des Auf- und Abladens zu berücksichtigen sind und die Standsicherheit des Fahrzeugs gegeben bleiben muß.

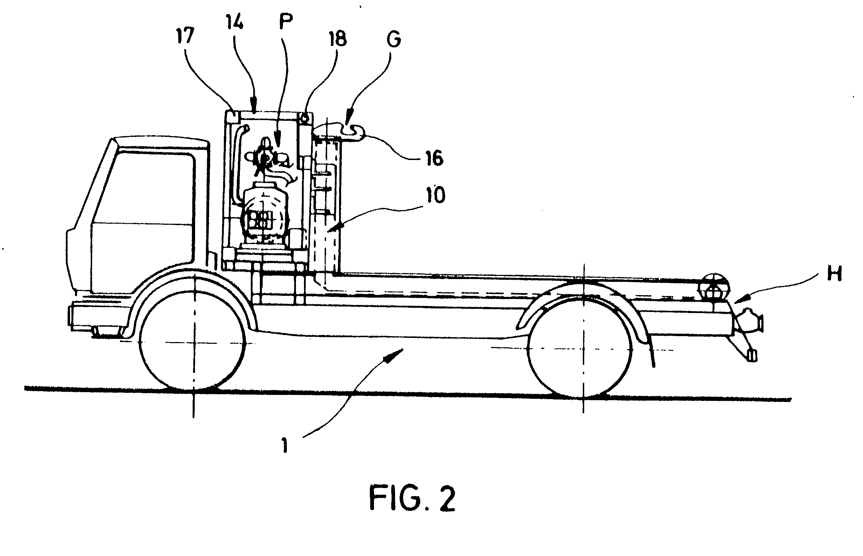

Aus Fig. 2 ist zu entnehmen, daß der Sammelbehälter 5 von Fig. 1 über das Heck H hinweg abgeladen worden ist. Der Platz auf dem Fahrzeugrahmen an der Hinterseite des Tragarmes 10 ist leer. An Tragarm 10 ist kopfseitig ein Greifglied G angeordnet, das mit einem Haken 16 zum Manipulieren des Sammelbehälters dient. Die zusätzliche Last 14, d.h. das Pumpaggregat P ist in einen Rahmen 17 eingegliedert, der dem Tragarm 10 zugewandt eine Huböse 18 enthält.

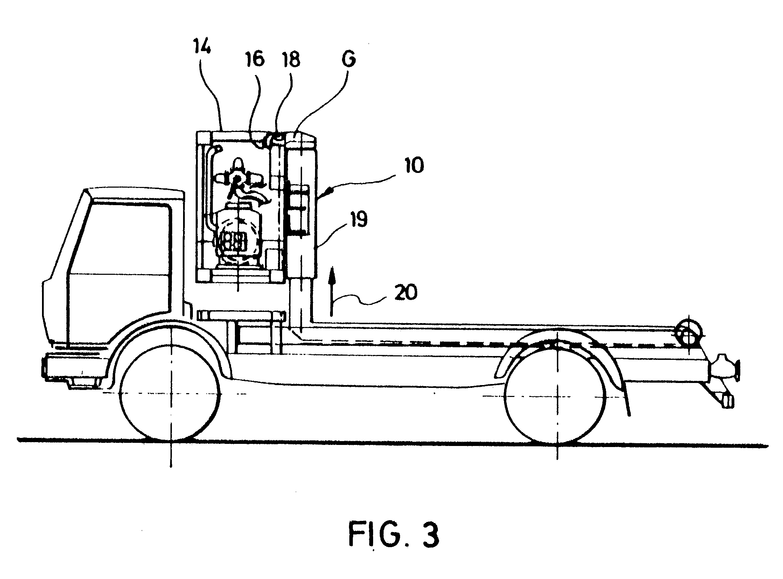

Die zusätzliche Last soll mit bordeigenen Mitteln abgeladen werden. Zu diesem Zweck werden gemäß Fig. 3 das Greifglied G um 180° gedreht, bis der Haken 16 auf die Huböse 18 der zusätzlichen Last 14 ausgerichtet ist und dann ein Hubteil 19 des Tragarms 10 in Richtung eines Pfeiles 20 angehoben, bis der Haken 16 die Huböse 18 ergreift und die zusätzliche Last 14 ein vorbestimmtes Mäß anhebt.

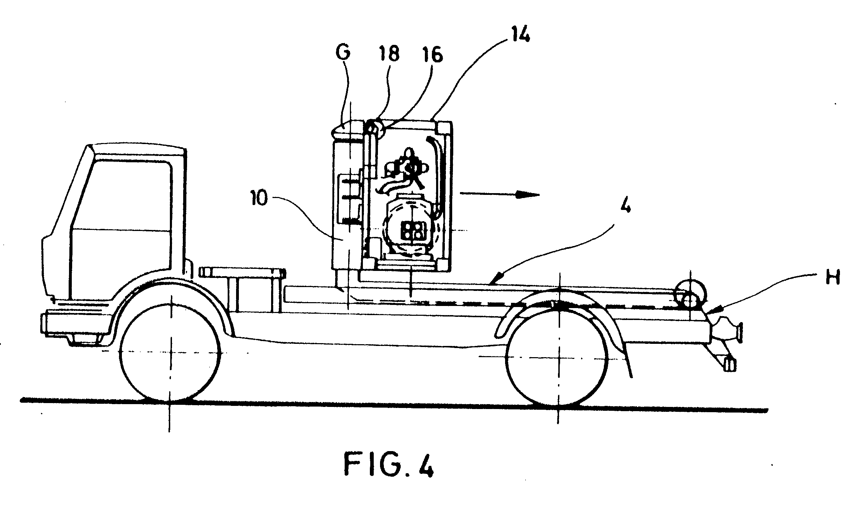

Danach wird das Greifglied G mit der mit ihrer Huböse 18 am Haken 16 hängenden zusätzlichen Last 14 um 180° zur Hinterseite des Tragarms 10 gedreht und dabei gegebenenfalls abgesenkt. In weiterer Folge fährt der Tragarm 10 gemäß Fig. 4 in Richtung zum Fahrzeugheck H. Dann wird die Abroll-Kippvorrichtung 4 betätigt, um mit einer ähnlichen Bewegung wie beim Abladen des Sammelbehälters 5 die zusätzliche Last 14 abzuladen.

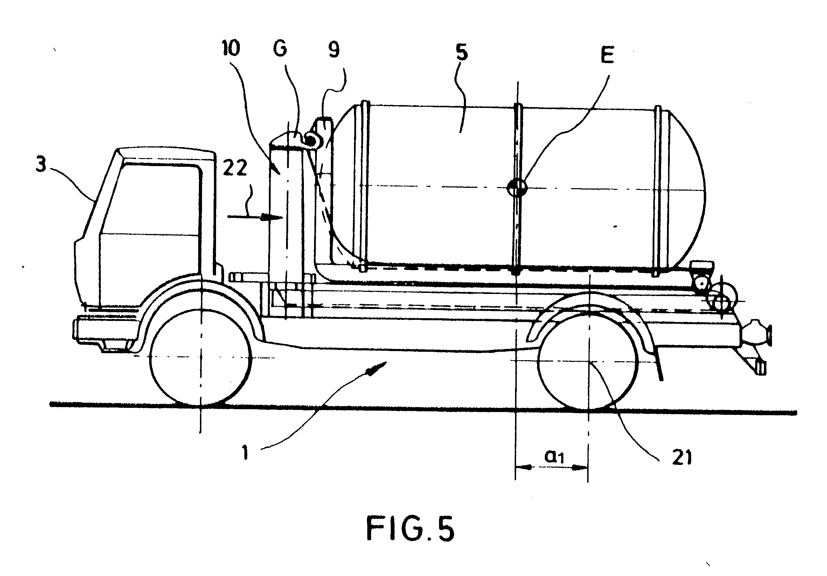

Gemäß Fig. 5 ist die zusätzliche Last 14 abgeladen und der Sammelbehälter 5, der zwischenzeitlich gefüllt wurde, mittels des Greifgliedes G wieder aufgeladen. Er ist in eine Transportstellung gezogen, in der sein Schwerpunkt Z in einem größeren Abstand a1 vor der Hinterachse 21 zu liegen kommt als in der Stellung gemäß Fig. 1., weil der Tragarm 10 in Richtung des Pfeiles 22 näher zum Führerhaus 3 hinverfahren worden ist. Es wird auf diese Weise ein größerer Teil des Gewichtes des Sammelbehälters 5 auf die Vorderachse verlagert, so daß bei gleicher Hinterachslast eine größere Nutzlast möglich ist. Ferner wird dank des weiter vorne liegenden Schwerpunktes Z des Sammelbehälters die Wendigkeit des Transportfahrzeuges verbessert und - wegen der abgeladenen Last 14 - die mögliche Zuladung erhöht. Bei abgeladener zusätzlicher Last 14 ist es ferner möglich, einen größeren Sammelbehälter 5 mit erhöhtem Fassungsvermögen aufzuladen, oder einen längeren Sammelbehälter als in Fig. 5.

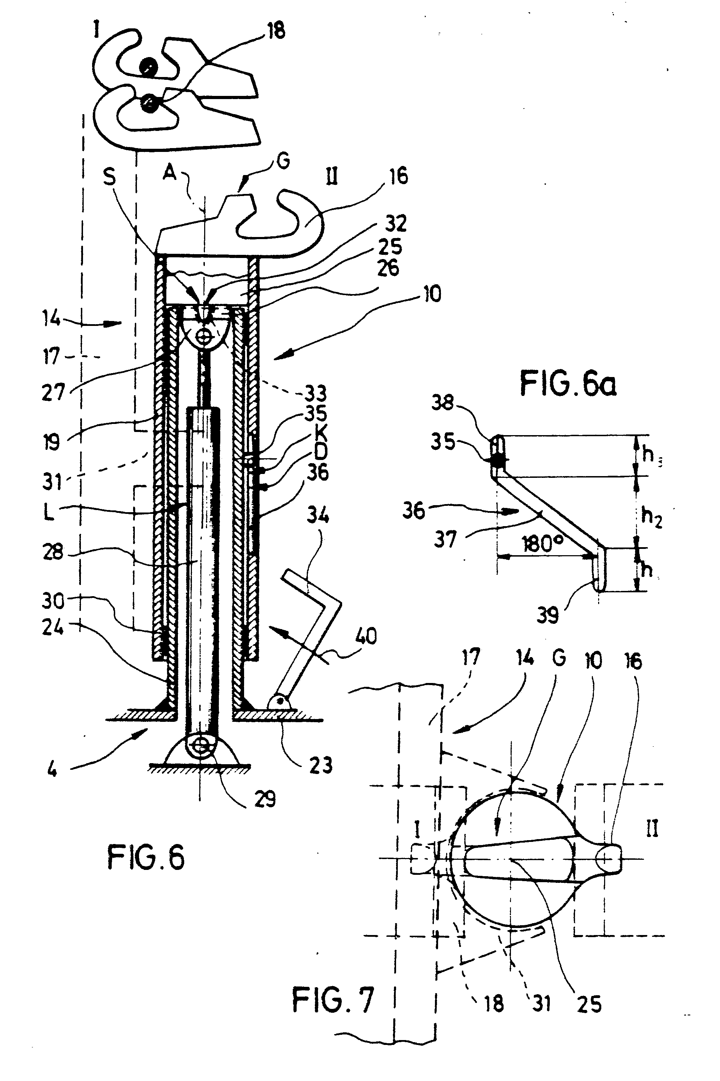

Fig. 6 zeigt den Tragarm 10 in einem Schnitt und in der Stellung gemäß Fig. 1, in der das Greifglied mit einem Haken 16 zur Hinterseite des Tragarms 10 und damit zum Sammelbehälter weist. Das Greifglied G befindet sich in einer zweiten Stellung II. Von der Abroll-Kippvorrichtung 4 ist in Fig. 6 ein Auflageteil 23 für den Tragarm 10 erkennbar. Auf dem Auflageteil 23 ist eine vertikale Führungssäule 24 verankert, auf der ein Grundkörper 25 des Greifgliedes G aufsitzt. An der Unterseite des Grundkörpers 25 ist im Inneren der Führungssäule 24 ein Axialdrehlager 26 befestigt, das ein Lagerauge 27 trägt, an dem die Kolbenstange eines Hubzylinders 28 angelenkt ist, der sich mit seinem unteren Lagerauge 29 an einem stationären Lager abstützt. Der Hubteil 19 ist bei dieser Ausführungsform als teleskopisch auf der Führungssäule 24 verschiebbares Rohr ausgebildet, das mit dem Grundkörper 25 bzw. dem Greifglied G fest verbunden ist. Zwischen dem Hubteil 19 und der Führungssäule 24 sind Gleiteinlagen 30 vorgesehen.

Zwischen der Führungssäule 24 und dem Grundkörper 25 des Greifgliedes G ist eine Drehsicherung S vorgesehen, die beispielsweise aus am Grundkörper 25 angeordneten Nocken 32 besteht, die in entsprechend geformte Vertiefungen 33 im Rand der Führungssäule 24 eingreifen und den Grundkörper 25 formschlüssig gegen eine Verdrehung um die Mittelachse A des Tragarmes 10 hindern.

Am Teil 23 sind mehrere Sperrklinken 24 befestigt, die durch nicht-dargestellte Mittel in Richtung eines Pfeiles 14 in eine Sperrlage an die Führungssäule 24 anlegbar sind, so daß der angehobene Hubteil 19 auf den Klinken 34 abgefangen wird.

Zwischen dem Hubteil 19 und der Führungssäule 24 ist ferner ein Drehantrieb D vorgesehen, der im gezeigten Ausführungsbeispiel aus einer Kulissendrehführung K besteht. Hierbei greift ein an der Führungssäule 24 angeordneter Gleitstein 35 in eine Führungskulisse 36 in der Innenwand des Hubteils 19 ein. Die relativen Lagen des Gleitsteines 35 und der Führungskulisse 36 können auch vertauscht sein. Ferner ist es möglich, mehrere Kulissendrehantriebe K in Umfangsrichtung verteilt anzuordnen, um die Belastung jedes einzelnen zu verringern. Der Hubzylinder 28 ist ein Hubantrieb L für das Greifglied G, während die Kulissendrehführung D der Drehantrieb für das Greifglied G ist, das bei dieser Ausführungsform automatisch bei Ausfahren des Greifgliedes G nach oben in Funktion tritt.

Fig. 6a verdeutlicht in einer Abwicklung den Verlauf der Führungskulisse 36. Diese weist einen Mittelabschnitt 37 auf, der nach Art eines Gewindeganges schräg verläuft und einen Anstieg über einen Hub h2 besitzt. Die Länge des Mittelabschnittes 37 ist so bemessen, daß sie annähernd einer Drehung des Hubteils 19 um 180° entspricht. Am oberen Ende des Mittelabschnitts 37 schließt sich ein axial verlaufender Aushebeabschnitt 38 an, und zwar über einen Hub h3, während sich am untenliegenden Ende des Mittelabschnitts 37 ein ebenfalls axial verlaufender Hebeabschnitt 39 über einen Hub h1 anschließt.

Fig. 7, die eine Draufsicht auf den Tragarm 10 von Fig. 6 ist, läßt erkennen, wie der Haken 16 des Greifgliedes G zwischen der Stellung II an der Hinterseite des Tragarmes 10 und einer um 180° gedrehten Stellung I an der Vorderseite des Tragarmes 10 hin- und herdrehbar ist.

Gemäß Fig. 1 und Fig. 6 liegt nahe der Vorderseite des Tragarmes 10 der Rahmen 17 mit der Huböse 18 für die zusätzliche Last 14. Die Huböse 18 befindet sich in einem Abstand oberhalb der Ebene des Greifgliedes G und so nahe am Tragarm 10, daß in der ersten Stellung I des Hakens 16 dieser exakt unter der Huböse 18 steht und bei der Anhebebewegung durch den im Hebeabschnitt 39 ablaufenden Gleitstein 35 das Maul des Hakens 16 die Huböse 18 ergreift. Ausgelöst wird die Drehbewegung des Hakens 16 aus der Stellung II, die zum Manipulieren des Sammelbehälters 5 vorgesehen ist, in die Stellung I durch die Bewegung des Hubzylinders 28. Beim Ausfahren seiner Kolbenstange bewegt sich der Hubteil 19 zunächst axial nach oben, bis der Gleitstein den Aushebeabschnitt 38 durchfahren hat. Dabei werden die Nocken 32 aus den Vertiefungen 33 herausgehoben. Nachfolgend gleitet der Gleitstein 35 entlang dem Mittelabschnitt 37, wobei sich der Haken 16 um 180° dreht und unter die Huböse 18 gelangt. Beim anschließenden axialen Hub des Hubteils 19 beim Bewegen des Gleitsteines 35 entlang dem Hebeabschnitt 39 wird die Huböse 18 ergriffen und die zusätzliche Last 14 angehoben, bis sie von ihrem Auflager 15 (Fig.1) freikommt. Beim Freikommen stützt sich der Rahmen 17 mit einer Abstützung 31, die ein V-förmiges Maul mit einer Gleitbeschichtung 41 besitzt, am Hubteil 19 ab, so daß die zusätzliche Last 14 nicht kippen kann. Bei gänzlich angehobenem Hubteil 19 springen die Sperrklinken 34 ein, so daß der Hubteil 19 nicht selbsttätig absinken kann. Dann kann die zusätzliche Last zum Abladen fertiggemacht werden. Der in den Hebeabschnitt 39 eingreifende Gleitstein 35 sorgt in dieser Phase für die Drehsicherung des Greifgliedes G und damit die Sicherung der angehobenen zusätzlichen Last 14. Die Sicherung soll nur greifen, solange der Tragarm 10 mit vorne daran hängender Last in Richtung zum Heck H bewegt, bzw. abgerückt, wird.

Zum weiteren Abladen werden dann die Sperrklinken 34 wieder gelöst und der Hubzylinder 28 eingefahren. Der Gleitstein gleitet entlang dem Mittelabschnitt 37 und dreht das Greifglied mit der daran hängenden zusätzlichen Last 14 in die zweite Stellung II zur Hinterseite des Tragarmes 10, bis schließlich die Drehsicherung S wieder eingreift. Nicht dargestellte Mittel blockieren dann das Greifglied G gegen eine Abhebebewegung, die zum Lösen der Drehsicherung führen könnte. Dann wird die Abroll-Kippvorrichtung 4 in der üblichen Weise benutzt, um die zusätzliche Last 14, die dann frei am Haken 16 hängt, vom Transportfahrzeug 1 abzuladen.

Das Aufladen läuft in umgekehrten Schritten ab.

Anstelle des Drehantriebs D gemäß Fig. 6 könnte die Drehbewegung des Greifgliedes G auch von Hand durchgeführt werden. Ferner ist denkbar, am Greifglied G einen Schnecken- oder Zahntrieb oder einen Zylinder angreifen zu lassen, mit dem die Drehbewegungen ferngesteuert veranlaßt werden.

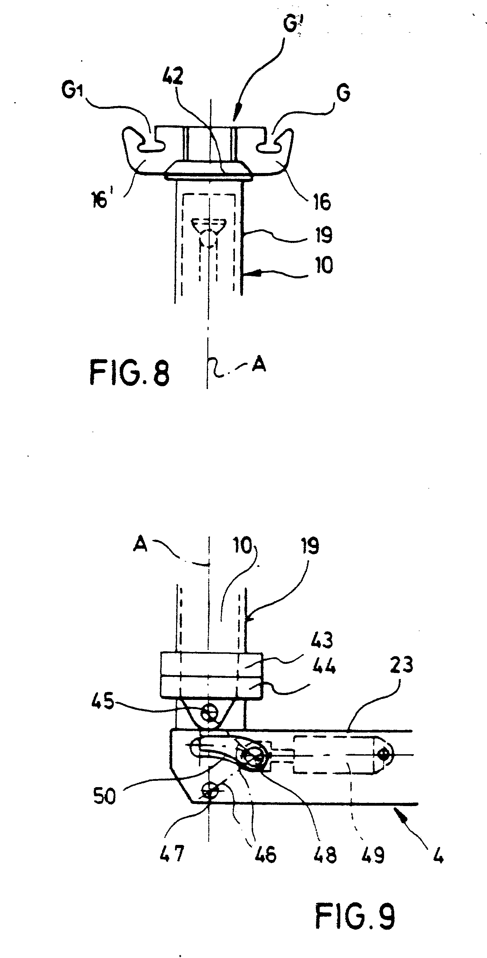

Bei der Ausführungsform gemäß Fig. 8 ist das Greifglied G′ aus zwei einstückig miteinander verbundenen Greifgliedern G und G1 gebildet, die einen Doppelhaken 16, 16′ ergeben, der mit einer Basisplatte 42 in der aus Fig. 6 erkennbaren Weise am Hubteil 19 des Tragarms 10 befestigt und um die Mittelachse A um mindestens 180° drehbar ist. Bei dieser Ausbildung ist jeweils ein Haken 16 oder 16′ für die zusätzliche Last und der andere für den Sammelbehälter in Bereitstellung, so daß voreilend zum Abladen der zusätzlichen Last keiner der Haken 16 oder 16′ um 180° verdreht zu werden braucht. Es ist vielmehr nur notwendig, den jeweils auf die Huböse 18 der zusätzlichen Last 14 ausgerichteten Haken 16 oder 16′ so weit anzuheben, daß zunächst die Drehsicherung S gelöst und dann die zusätzliche Last vom Auflager 15 abgehoben wird. Bei der weiteren Hubbewegung erfolgt die 180° Drehung um die Mittelachse A, mit der bis zum Ende der Hubbewegung die zusätzliche Last zur Hinterseite des Tragarms 10 bewegt wird. Die beiden Haken 16, 16′ können verschiedenartig ausgebildet sein oder und in verschiedenen Höhen relativ zueinander angeordnet sein.

Bei der Ausführungsform gemäß Fig. 9 ist anstelle des in Fig. 6 im Inneren der Führungssäule 24 gezeichneten Hubzylinders 28 ein senkrecht zur Mittelachse A des Tragarmes 10 liegender Hubzylinder 49 vorgesehen, der im Teil 23 der Abroll-Kippvorrichtung 4 untergebracht ist. Die Bewegungssteuerung des drehbaren und anhebbaren Hubteils 19 wird über einen Kniehebelmechanismus gesteuert, der aus Kniehebeln 46 besteht, die in einem mit der Kolbenstange des Hubzylinders 49 verbundenen Gelenk 48 miteinander verbunden und an einer stationären Gelenkstelle 47 sowie einer am unteren Ende des Hubteils 19 angeordneten Gelenkstelle 45 angelenkt sind. Der Hubteil 19 besitzt einen unteren Ringflansch 43, der auf einem nur anhebbaren Gleitflansch 44 aufsitzt, so daß hier zwischen den Flanschen 43 und 44 die axiale Drehlagerung gebildet wird. Das Gelenk 48 ist in stationären Stützschlitzen 50 derart geführt, daß sich in der Übertotpunktlage bei angehobenem Hubteil 19 eine selbsttätige Arretierung ergibt, die das Absinken des Teils 19 unter der Last verhindert. Es liegt auf der Hand, daß auch mehrere nebeneinanderliegende Hubzylinder 49 vorgesehen sein könnten, oder daß für jede Bewegungsrichtung des Kniegelenks ein eigener Hubzylinder eingesetzt wird.

Das Antriebsprinzip mit dem Kniehebelmechanismus gemäß Fig. 9 ist besonders für die Ausbildung des Greifgliedes G' mit dem Doppelhaken 16, 16' geeignet. Ist für den Doppelhaken 16, 16' eine Drehung per Hand vorgesehen bzw. eine Fernsteuerung mit einem eigenen Drehhilfsantrieb, so braucht der Kniehebelmechanismus nur die Hubhöhe zu erbringen, bei der die Drehsicherung des Doppelhakens 16, 16' gelöst und die zusätzliche Last 14 soweit angehoben wird, daß sie von ihren Auflagern 15 freikommt. Die dem Mittelabschnitt 37 gemäß Fig. 6a entsprechende Hubhöhe für den Hubteil 19 wird dann nicht benötigt, weil die Drehbewegung des Doppelhakens 16, 16' nicht von der Hubbewegung abgeleitet zu werden braucht.

Das vorbeschriebene Transportfahrzeug hat als Sammel-Tankfahrzeug mit einem Pumpaggregat eine bestimmte Zuladefähigkeit. Durch die mittels des drehbaren Greifhakens gebotene Möglichkeit, die Abroll-Kippvorrichtung 4 auch zum Manipulieren des Pumpaggregats zu benutzen, läßt sich durch Abnahme des Pumpaggregats ein Transport-Tankfahrzeug mit höherer Transportkapazität schaffen.

Die in den vorerwähnten Ausführungsbeispielen beschriebene Drehsicherung S für das Greifglied kann auch auf andere Weise bewerkstelligt werden, z.B. mittels elektrischer, hydraulischer oder pneumatisch bzw. von Hand zu lösender Mittel. Auch für die Hubsicherung des angehobenen Hubteils, bzw. des Greifgliedes gegen eine ungewollte Bewegung, können ferngesteuerte oder von Hand zu betätigende Mittel eingesetzt werden. Ferner ist es möglich, den Hubteil im Inneren der Führungssäule 24 unterzubringen und dort auch die zur Bewegungssteuerung notwendigen Komponenten vorzusehen. Denkbar wäre es ferner, den Tragarm 10 als Ganzes mit in die Abroll-Kippvorrichtung 4. integrierten Bewegungsmitteln anzuheben und aus dieser Anhebebewegung die notwendigen Drehbewegungen für das Greifglied abzuleiten. Obwohl dies nicht dargestellt ist, können die Haken 16, 16' in üblicher Weise mit willkürlich oder unwillkürlich sichernden Mitteln ausgestattet sein, die das selbsttätige Herauslösen der Huböse bei einer Überkopf- oder Schräglage des Hakens 16, 16' verhindern.

## Ansprüche

1. Transportfahrzeug (1), insbesondere zur Abfallentsorgung, mit einer hinter dem Führerhaus (3) auf dem Fahrzeugrahmen (2) angeordneten Abroll-Kippvorrichtung (4) für einen Sammelbehälter (5), und mit wenigstens einem in der Abroll-Kippvorrichtung angeordneten, in der Transportstellung vom Fahrzeugrahmen hochragenden und ein zum Fahrzeugheck weisendes Greifglied (G) zur Manipulation des Sammelbehälters (5) aufweisenden Tragarm (10) , der mit der Abroll-Kippvorrichtung zwischen der Transportstellung und einer Auf- bzw. Abladestellung relativ zum Fahrzeugrahmen bewegbar ist, **dadurch gekennzeichnet,** daß am Tragarm (10) ein Greifglied (G, G' , G1) für eine zusätzliche und zwischen dem Führerhaus (3) und dem Tragarm (10) auf dem Fahrzeugrahmen (2) transportierbare Last (14) vorgesehen ist, und daß das Greifglied (G, G1, G') für die zusätzliche Last (14) in der Transportstellung des Tragarms (10) zwischen einer ersten Stellung (I) an der dem Führerhaus (3) zugewandten Vorderseite und einer zweiten Stellung (II) an der dem Fahrzeugheck (H) zugewandten Rückseite des Tragarms (10) hin- und herbewegbar und zumindest in der zweiten Stellung (II) anhebbar ist.

2. Transportfahrzeug nach Anspruch 1, **dadurch gekennzeichnet,** daß das Greifglied (G) für die zusätzliche Last (14) das Greifglied für den Sammelbehälter (5) ist, und daß sich das Greifglied (G) am Kopfende des Tragarms (10) befindet.

3. Transportfahrzeug nach Anspruch 1, **dadurch gekennzeichnet,** daß das Greifglied (G1) für die zusätzliche Last (14) mit dem Greifglied (G) für den Sammelbehälter (5) baulich zu einem Doppelhaken (G') vereinigt ist, der sich am Kopfende des Tragarms (10) befindet.

4. Transportfahrzeug nach den Ansprüchen 1 bis 3, **dadurch gekennzeichnet,** daß das Greifglied (G, G1) für die zusätzliche Last (14) um mindestens 180° drehbar ist, vorzugweise um die Mittelachse (25) des Tragarms (10).

5. Transportfahrzeug nach den Ansprüchen 1 bis 4, bei dem der Sammelbehälter (5) ein Aufsetztank oder ein Tankcontainer ist, und bei dem zwischen dem Führerhaus (3) und dem Tragarm (10) ein Pumpaggregat (P) vorgesehen ist, **dadurch gekennzeichnet,** daß das Pumpaggregat (P) in der Transportstellung am Fahrzeugrahmen (2) lösbar angebracht und mit wenigstens einer Huböse (18) für das Greifglied (G, G1) ausgestattet ist, und daß das Greifglied (G, G1) in seiner ersten Stellung (I) auf die Huböse (18) ausgerichtet ist.

6. Transportfahrzeug nach einem der Ansprüche 1 bis 5, **dadurch gekennzeichnet, daß** das Greifglied (G, G1) zumindest mit einem Hubantrieb (L) verbunden und von Hand oder mittels eines gesonderten Drehhilfsantriebs verdrehbar ist.

7. Transportfahrzeug nach einem der Ansprüche 1 bis 5, **dadurch gekennzeichnet, daß** das Greifglied (G, G1) mit einem kombinierten Hub- und Drehantrieb (L, D) verbunden ist.

8. Transportfahrzeug nach einem der Ansprüche 1 bis 7, **dadurch gekennzeichnet, daß** am Tragarm (10) eine zum Manipulieren der zusätzlichen Last (14) lösbare Drehsicherung (S) für das Greifglied (G, G1) vorgesehen ist.

9. Transportfahrzeug nach Anspruch 5, **dadurch gekennzeichnet, daß** zwischen dem Pumpaggregat (P) und dem Tragarm (10) im Abstand unterhalb des Greifgliedes (G, G1) eine Abstützung (31) vorgesehen ist.

10. Transportfahrzeug nach einem der Ansprüche 1 bis 9, **dadurch gekennzeichnet,** der Tragarm (10) eine in der Abroll-Kippvorrichtung (4) stationäre Führungssäule (24) aufweist, an der - außen oder innen - ein Hubteil (19) des Greifglieds (G, G1) geführt ist, daß zwischen das Hubteil (19) und die Abroll-Kippvorrichtung (4) wenigstens ein Hubzylinder (28, 49) mittel- oder unmittelbar eingesetzt ist, und daß zwischen dem Hubteil (19) und der Führungssäule (24) eine Kulissendrehführung (K) eingeordnet ist, mit der das Greifglied (G, G1) bei einer Hubbewegung automatisch verdrehbar ist.

11. Transportfahrzeug nach Anspruch 10, **dadurch gekennzeichnet, daß** die Kulissendrehführung (K) wenigstens eine Führungskulisse (36) für einen Gleitstein (35) enthält, und daß die Führungskulisse (36) einen gewindegangartigen Mittelabschnitt (37) aufweist, der sich im Bogenmaß um mindestens 180° -bezogen auf die Mittelachse (25) des Tragarms (10) -erstreckt.

12. Transportfahrzeug nach einem der Ansprüche 1 bis 11, **dadurch gekennzeichnet, daß** die Drehsicherung (S) zwischen dem Greifglied (G, G1) und der Führungssäule (24) und formschlüssig ausgebildet ist, und daß die Führungskulisse (36) einen annähernd axialen Aushebeabschnitt (38) zum Lösen der Drehsicherung (S) aufweist.

13. Transportfahrzeug nach einem der Ansprüche 11 und 12, **dadurch gekennzeichnet, daß** am dem Aushebeabschnitt (38) gegenüberliegenden Ende des Mittelabschnitts (37) der Führungskulisse (36) ein axialer Hebeabschnitt (39) vorgesehen ist.

14. Transportfahrzeug nach Anspruch 10, **dadurch gekennzeichnet, daß** der Hubzylinder (28) im Inneren der Führungssäule (24) angeordnet ist und am Hubteil (19) über ein Axialdrehlager (26) angelenkt ist.

15. Transportfahrzeug nach Anspruch 14, **dadurch gekennzeichnet, daß** wenigstens eine von Hand oder mechanisch, pneumatisch oder hydraulisch betätigbare Sperrklinke (34) zum Lagesichern des Hubteils (19) in der angehobenen Stellung vorgesehen ist.

16. Transportfahrzeug nach Anspruch 10, **dadurch gekennzeichnet, daß** der Hubzylinder (49) unterhalb der Führungssäule (24) und zu dieser senkrecht liegend in der Abroll-Kippvorrichtung (4) angeordnet und mit dem Hubteil (19) über ein, vorzugsweise selbstsperrendes, Kniehebel-Getriebe (45 - 48) verbunden ist.

17. Transportfahrzeug nach einem der Ansprüche 1 bis 16, **dadurch gekennzeichnet, daß** der Drehhilfsantrieb ein pneumatischer, ein hydraulischer oder ein elektrischer Antrieb ist, der mittels eines Zylinders oder mittels Zahn- oder Schneckentriebs am Greifglied (G, G1) oder am Hubteil (19) angreift.

18. Transportfahrzeug nach einem der Ansprüche 1 bis 17, **dadurch gekennzeichnet, daß** für das Greifglied (G, G1) in der tiefsten Stellung eine lösbare Lagesicherung gegen eine ungewollte Hubbewegung vorgesehen ist.

FIG.1

FIG. 2

EP 0 316 600 A1

EP 4706

**FIG. 3**

EP 0 316 600 A1

EP 4706

FIG.4

EP 0 316 600 A1

EP 4706

FIG.5

EP 0 316 600 A1

EP 4706

FIG.6

FIG.6a

FIG.7

FIG.8

FIG.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-A-2 044 155 (BOCK) <br> * Seiten 1-8; Figuren 2-5 * <br> --- | 1 | E 03 F 7/10 // <br> B 60 P 1/64 |
| A,D | DE-A-2 617 638 (GEORG) <br> * Ansprüche; Figuren 1-4 * <br> --- | 1 | |
| A | DE-A-2 821 934 (MUT) <br> * Anspruch 1; Seite 6; Figur 1 * <br> --- | 1,5 | |
| A | US-A-3 836 012 (GRIDER) <br> * Spalten 3-6; Figuren 4,6 * <br> ----- | 11 | |
| | | | **RECHERCHIERTE SACHGEBIETE (Int. Cl.4)** <br><br> E 03 F <br> B 60 P <br> B 66 F |

Der vorliegende Recherchenbericht wurde für alle Patentansprüche erstellt

| Recherchenort | Abschlußdatum der Recherche | Prüfer |
|---|---|---|
| DEN HAAG | 07-12-1988 | HANNAART J.P. |

EPO FORM 1503 03.82 (P0403)